# EUROPEAN PATENT SPECIFICATION

(11) **EP 2 743 828 B1**
(45) Date of publication and mention of the grant of the patent: **04.01.2017**
(21) Application number: 13164315.7
(22) Date of filing: 18.04.2013
(51) Int. Cl.: G06F 9/445

(54) **Firmware updating method and system for multiple processors**
Firmwareaktualisierungsverfahren und -system für mehrere Prozessoren
Procédé et système de mise à jour de micrologiciel pour processeurs multiples

(30) Priority: 12.12.2012 TW 101146976
(43) Date of publication of application: 18.06.2014
(73) Proprietor: Compal Broadband Networks Inc., 114 Taipei City (TW)
(72) Inventor: Lin, Hung-Che, 702 Tainan City (TW)
(74) Representative: Becker Kurig Straus

(56) References cited:
- US-A1- 2006 277 524

## Description

### Field of the Invention

The invention relates to a firmware updating method and related system for multiple processors, and especially relates to a firmware updating method and related system for multiple processors with rapid, stable and easily expandable characteristics.

### Background of the Invention

With higher requirements for multimedia applications, an embedded electronic device, such as a mobile device, a tablet or a set-top box, etc, is required to play videos in real time and perform a lot of graphical user interfaces. Moreover, if touch, sound and light effects are also added, the system processing load of the embedded electronic device may further increase, and an embedded single processor confronted with these massive multimedia computations may suffer overloading. Thus, multiple processors are required to relieve a bottleneck of the system performance.

In a multi-processor embedded system, for adding new features, fixing errors, or improving stability, etc., each firmware of the multiple processors is required to be updated. A conventional firmware updating method for the multiple processors may sequentially upload the updating firmware of each processor to a storage medium of the embedded system and individually update each firmware of the multiple processors.

However, when each processor individually uploads and updates the individual firmware, time is spent for respectively performing uploading the firmware, and when the firmware of each processor is updated and each processor restarts to execute the new firmware, a compatibility problem may be also appeared. For example, a processor has executed the new firmware and another co-operation processor is still executing the old firmware.

Therefore, in the multi-processor embedded system, rapidly updating the firmware of each processor and simultaneously maintaining compatibility between all processors have become an important topic in the field.

### Summary of the Invention

This in mind, the present invention aims at providing a firmware updating method and related system for multiple processors with rapid, stable and easily expandable characteristics.

This is achieved by a firmware updating method and a firmware updating system according to claims 1 and 8. The dependent claims pertain to corresponding further developments and improvements.

As will be seen more clearly from the detailed description following below, the claimed firmware updating method, for at least one processor, comprising storing a packaged firmware to a packaged firmware storage unit; reading and analyzing a packaged information in the packaged firmware; reading a first firmware in the packaged firmware according to the packaged information to update a firmware of a first processor; generating at least one updating information corresponding to at least one second processor according to the packaged information; outputting the at least one updating information to the corresponding at least one second processor and notifying the at least one second processor to read corresponding at least one second firmware in the packaged firmware for updating a firmware of the at least one second processor; and generating a start signal according to corresponding at least one complete signal generated by the at least one second processor after the firmware of the at least one second processor is updated, to notify the first processor and the at least one second processor restarting ; wherein the at least one second processor reads the corresponding at least one second firmware in the packaged firmware according to the corresponding at least one updating information for updating the firmware of the at least one second processor.

### Brief Description of the Drawings

FIG. 1 illustrates a schematic diagram of a multi-processor firmware updating system according to an embodiment of the present invention.
FIG. 2 illustrates a schematic diagram of a multi-processor firmware updating process according to an embodiment of the present invention.

### Detailed Description

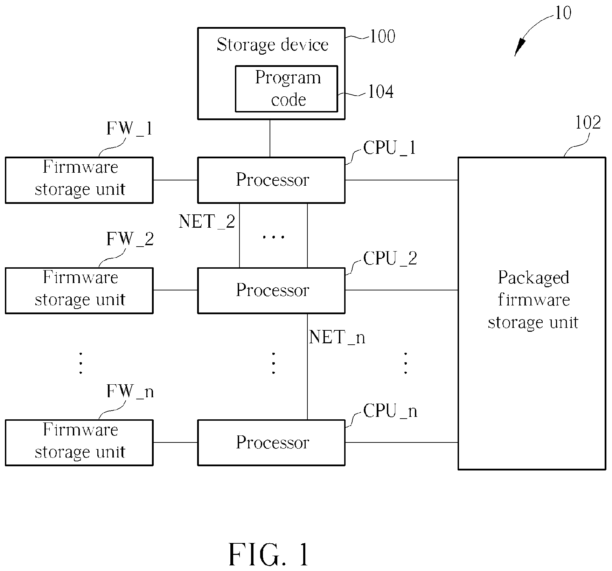

Please refer to FIG. 1, which illustrates a schematic diagram of a multi-processor firmware updating system 10 according to an embodiment of the present invention. As shown in FIG. 1, the multi-processor firmware updating system 10 includes processors CPU_1-CPU_n, firmware storage units FW_1-FW_n, a storage device 100, and a packaged firmware storage unit 102. The processors CPU_1-CPU_n are coupled to the corresponding firmware storage units FW_1-FW_n respectively, and the processors CPU_1-CPU_n may respectively read firmware in the firmware storage units FW_1-FW_n to operate under a normal operation. The firmware storage units FW_1-FW_n are utilized for storing firmware of the processors CPU_1-CPU_n, may be a static random access memory (SRAM) or a flash memory for reusable storing, etc. , and may also be merged as one storage unit, which is not limited herein. The storage device 100 is utilized for storing a program code 104. The program code 104 may indicate the processor CPU_1 to perform a multi-processor firmware updating process when the firmwares of the multiple processors are performed updating. The packaged firmware storage unit 102 is utilized for storing updating firmware and is coupled to the processors CPU_1-CPU_n, such that the processors CPU_1-CPU_n may read and update the firmwares.

In short, when the firmwares of the multiple processors are performed updating, the program code 104 stored in the storage device 100 may indicate the processor CPU_1 to upload the updating firmwares of all of the processors CPU_1-CPU_n and store the updating firmwares to the packaged firmware storage unit 102, and indicate the processor CPU_1 to communicate with each other and notify the firmware updating procedures by utilizing transmission lines NET_2-NET_n between the processor CPU_1 and the processors CPU_2-CPU_n. Then, after the processors CPU_1-CPU_n read the new firmwares from the packaged firmware storage unit 102 and update the new firmwares to the firmware storage units FW_1-FW_n, the processors CPU_1-CPU_n are notified of proceeding restart by the processor CPU_1. As a result, since the updating firmwares of all the processors are combined and packaged, the updating firmwares of all the processors are uploaded once by the processor CPU_1, and the individual uploading time of each processor may be saved. Moreover, since the processor CPU_1 notifies all the processors of performing restart, the asynchronous problem between the multiple processors may be avoided and the system compatibility may be maintained.

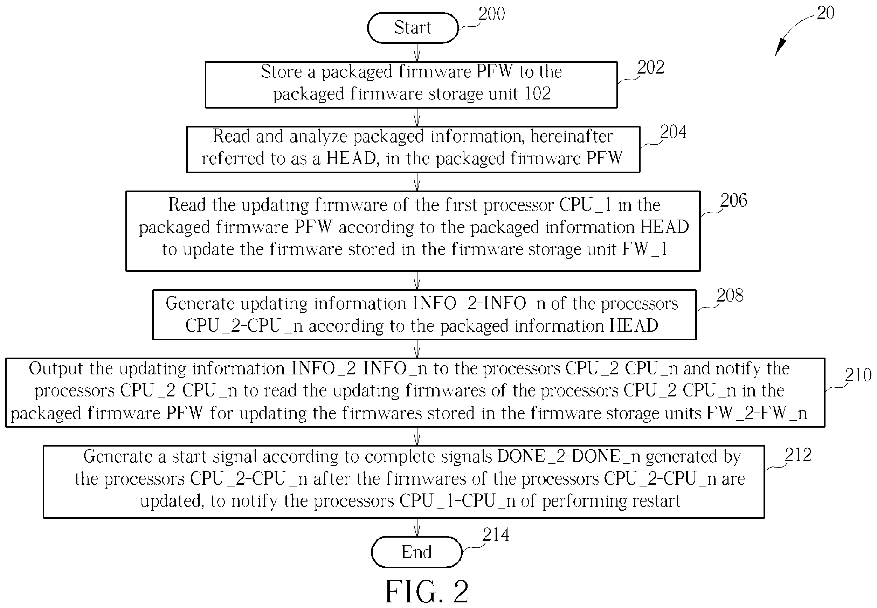

In detail, please refer to FIG. 2, which illustrates a schematic diagram of a multi-processor firmware updating process 20 according to an embodiment of the present invention. According to an embodiment of the present invention, the multi-processor firmware updating process 20 is compiled as the program code 104 to be stored in the storage device 100 for controlling the processor CPU_1 to perform updating the firmwares in the multi-processor firmware updating system 10, which does not intend to limit the scope of the present invention. As shown in FIG. 2, the multi-processor firmware updating process 20 includes the following steps:
- Step 200:: Start.
- Step 202:: Store a packaged firmware PFW to the packaged firmware storage unit 102.
- Step 204:: Read and analyze packaged information, hereinafter referred to as a HEAD, in the packaged firmware PFW.
- Step 206:: Read the updating firmware of the first processor CPU_1 in the packaged firmware PFW according to the packaged information HEAD to update the firmware stored in the firmware storage unit FW_1.
- Step 208:: Generate updating information INFO_2-INFO_n of the processors CPU_2-CPU_n according to the packaged information HEAD.
- Step 210:: Output the updating information INFO_2-INFO_n to the processors CPU_2-CPU_n and notify the processors CPU_2-CPU_n to read the updating firmwares of the processors CPU_2-CPU_n in the packaged firmware PFW for updating the firmwares stored in the firmware storage units FW_2-FW_n.
- Step 212:: Generate a start signal according to complete signals DONE_2-DONE_n generated by the processors CPU_2-CPU_n after the firmwares of the processors CPU_2-CPU_n are updated, to notify the processors CPU_1-CPU_n of performing restart.
- Step 214:: End.

In step 202, the processor CPU_1 uploads the packaged firmware PFW to the packaged firmware storage unit 102. The packaged firmware PFW includes the packaged information HEAD and updating firmware data DAT_1-DAT_n. The packaged information HEAD is utilized for recording information of the updating firmware data DAT_1-DAT_n, and the updating firmware data DAT_1-DAT_n is the new updating firmware data of the processors CPU_1-CPU_n.

According to an embodiment, the packaged information HEAD may include updating information TAG_1-TAG_n for respectively recording the information of the updating firmware data DAT_1-DAT_n. For the updating information TAG_1, the updating information TAG_1 includes a head, an information length, an information check code, a firmware start position, a firmware length, and a firmware check code. The head may record text information of the updating firmware data DAT_1, such as a version or a purpose for updating; the information length is a data length of the updating information TAG_1; the information check code encoded by a cyclic redundancy check (CRC) for checking data correctness of the updating information TAG_1; the firmware start position is a start position of the updating firmware data DAT_1 in the packaged firmware PFW; the firmware length is a data length of the updating firmware data DAT_1; the firmware start position and the firmware length may be utilized for obtaining the updating firmware data DAT_1 in the packaged firmware PFW; and the firmware check code encoded by the CRC for checking data correctness of the updating firmware data DAT_1. Note that, the packaged information HEAD is utilized for recording the information of the updating firmware data DAT_1-DAT_n in the packaged firmware PFW, such that the updating firmware data DAT_1-DAT_n may be obtained from the packaged firmware PFW, which may be made by different alterations accordingly and is not be limited.

In steps 202-206, the processor CPU_1 first reads the packaged information HEAD (including the updating information TAG_1-TAG_n) in the packaged firmware PFW, utilizes the information length in the updating information TAG_1-TAG_n to sequentially read the updating information TAG_1-TAG_n, and may utilize the information check code to check whether data of the updating information TAG_1-TAG_n is correct. If the data of the updating information TAG_1-TAG_n is not correct, the processor CPU_1 may indicate that the firmware fails to be updated. Then, the processor CPU_1 reads the updating firmware data DAT_1 of the processor CPU_1 in the packaged firmware storage unit 102 according to the firmware start position and the firmware length in the updating information TAG_1, utilizes the firmware check code for checking, and updates the updating firmware data DAT_1 to the firmware storage unit FW_1.

In steps 208-210, the processor CPU_1 reads firmware start positions and firmware lengths in the updating information TAG_2-TAG_n to generate the updating information INFO_2-INFO_n, and transmit the updating information INFO_2-INFO_n to the processors CPU_2-CPU_n via the transmission lines NET_2-NET_n. The processors CPU_2-CPU_n read the updating firmware data DAT_2-DAT_n in the packaged firmware PFW of the packaged firmware storage unit 102 according to the updating information INFO_2-INFO_n (i.e. including the firmware start positions and the firmware lengths), utilize the firmware check codes for checking, and update the updating firmware data DAT_2-DAT_n to the firmware storage units FW_2-FW_n.

In step 212, after the firmwares of the processors CPU_2-CPU_n are updated, the processors CPU_2-CPU_n generate the complete signals DONE_2-DONE_n and transmit the complete signals DONE_2-DONE_n to the processor CPU_1 through the transmission lines NET_2-NET_n. The processor CPU_1 determines whether the firmwares are indicated to be updated from the complete signals DONE_2-DONE_n according to the processors for performing the firmware updating, and after the processor CPU_1 confirms the firmwares of the processors for performing the firmware updating are updated, the processor CPU_1 generates the start signal to notify the processors CPU_1-CPU_n of performing restart.

In other words, the present invention packs the updating firmwares of all the processors CPU_1-CPU_n as the packaged firmware PFW to upload to the packaged firmware storage unit 102 once, and adds the packaged information HEAD into the packaged firmware PFW for recording the information of each firmware. Then, the processor CPU_1 is utilized for analyzing the packaged information HEAD, and after the processor CPU_1 updates the firmware itself, the processor CPU_1 notifies the processors CPU_2-CPU_n to update the firmware. After the firmwares of all the processors are updated, the processor CPU_1 determines to notify all processors of performing restart. Thereby, since the packaged firmware is only required to be uploaded once, the individual uploading time for updating the firmware of the processors may be reduced, so as to reduce the firmware updating time. Moreover, after the firmwares of all the processors are determined to be updated, all the processors restart. Thus, the compatibility problem, which occurs when a processor has executed new firmware and another co-operation processor is still executing old firmware, may be avoided.

Noticeably, in the embodiment, the multi-processor firmware updating process 20 performs firmware updating of the processors CPU_1-CPU_n. However, not all the processors are fixedly required for updating the firmware, and may only a part of the processors be required for updating the firmware. Only the firmwares of the processors required to be updated are required to be packed, and the processors required for updating firmware may be obtained by the packed information. Thereby, the multi-processor firmware updating process 20 is more expandable and flexible.

Specifically, the embodiment of the present invention is to pack the updating firmwares of the multiple processors as a packaged firmware and utilize the processor CPU_1 to analyze information in the packaged firmware to perform the multi-processor firmware updating process. Those skilled in the art can make modifications or alterations accordingly and are not limited herein. For example, in the embodiment, the processor CPU_1 first updates the firmware itself and notifies the other processors to update the firmware. However, in other embodiment, the processor CPU_1 may first notify the other processors to update the firmware and then update the firmware itself.

Additionally, in the embodiment, the processor CPU_1 is utilized to perform the multi-processor firmware updating process. However, in other embodiment, the processor CPU_2 or other processors may also be utilized, and any one processor, which is pre-designed according to the requirement, may perform updating the firmware according to the program code of the storage device 100 in the multi-processor firmware updating system 10, and is not limited.

In addition, in the embodiment, the packaged firmware PFW includes the check code for checking the correctness of the updating information and the updating firmware data, and when the data is wrong, the processor may notify that the firmware fails to be updated, so as to confirm the correctness for updating the firmware. In other embodiments, another encoding code or method may also be utilized to confirm the correctness for updating the firmware, and can make different modifications accordingly and is not limited.

Moreover, in the embodiment, the packaged information HEAD of the packaged firmware PFW is utilized for recording the information of all the firmwares packed in the packaged firmware PFW, which is not limited. In other embodiments, the firmware data may have a fixed length and the information of the fixed length is recorded in the firmware data. Thus, the packaged information is not required. Moreover, the packaged firmware PFW may also be compressed data, and is required to be decompressed first by the processor and then the processor may perform reading and analyzing, which can derive different alterations accordingly.

In summary, in the prior art, when the firmware of the multiple processors is updated, the firmware of each processor is individually updated. Time is spent for respectively performing uploading the firmware and the compatibility problem of system may also appear. In comparison, the present invention utilizes the packaged firmware and controls the multi-processor firmware updating process by a processor to have rapid, stable and easily expandable characteristics.

## Claims

1. A firmware updating method (20), for at least one processor, **characterized by** comprising:
storing a packaged firmware to a packaged firmware storage unit (202);
reading and analyzing a packaged information in the packaged firmware (204);
reading a first firmware in the packaged firmware according to the packaged information to update a firmware of a first processor (206);
generating at least one updating information corresponding to at least one second processor according to the packaged information (208);
outputting the at least one updating information to the corresponding at least one second processor and notifying the at least one second processor to read corresponding at least one second firmware in the packaged firmware for updating a firmware of the at least one second processor (210); and
generating a start signal according to corresponding at least one complete signal generated by the at least one second processor after the firmware of the at least one second processor is updated, to notify the first processor and the at least one second processor restarting (212);
wherein the at least one second processor reads the corresponding at least one second firmware in the packaged firmware according to the corresponding at least one updating information for updating the firmware of the at least one second processor;
wherein the packaged information comprises a data start position and a data size of the first firmware in the packaged firmware and at least one data start position and at least one data size of the at least one second firmware in the packaged firmware, and the firmware updating method comprises:
reading the first firmware according to the data start position and the data size of the first firmware in the packaged information;
generating the corresponding at least one data start position and the corresponding at least one data size of the at least one second firmware in the packaged firmware in the packaged information; and generating the start signal according to the corresponding at least one complete signal indicating that the firmware of all of the at least one second processor is updated completely.

2. The firmware updating method of claim 1, **characterized in that** the packaged firmware comprises a check code encoded by a cyclic redundancy check, CRC, for checking correctness of the packaged firmware.

3. The firmware updating method of claim 1, **characterized in that** the at least one second processor reads the corresponding at least one second firmware in the packaged firmware according to the corresponding at least one data start position and the corresponding at least one data size of the at least one second firmware.

4. A firmware updating system (10), for at least one processor (CPU_1-CPU_n), **characterized by** comprising:
a first processor (CPU_1);
at least one second processor (CPU_2-CPU_n); and
a storage device (100), storing a program code (104), wherein the program code (104) indicates the first processor (CPU_1) to perform a firmware updating method (20), and the firmware updating method (20) comprises:
storing a packaged firmware to a packaged firmware storage unit (202) ;
reading and analyzing a packaged information in the packaged firmware (204);
reading a first firmware in the packaged firmware according to the packaged information to update a firmware of a first processor (206);
generating at least one updating information corresponding to at least one second processor according to the packaged information (208);
outputting the at least one updating information to the corresponding at least one second processor and notifying the at least one second processor to read corresponding at least one second firmware in the packaged firmware for updating a firmware of the at least one second processor (210); and generating a start signal according to corresponding at least one complete signal generated by the at least one second processor after the firmware of the at least one second processor is updated, to notify the first processor and the at least one second processor restarting (212);
wherein the at least one second processor reads the corresponding at least one second firmware in the packaged firmware according to the corresponding at least one updating information for updating the firmware of the at least one second processor;
wherein the packaged information comprises a data start position and a data size of the first firmware in the packaged firmware and at least one data start position and at least one data size of the at least one second firmware in the packaged firmware, and the firmware updating method comprises:
reading the first firmware according to the data start position and the data size of the first firmware in the packaged information;
generating the corresponding at least one data start position and the corresponding at least one data size of the at least one second firmware in the packaged firmware in the packaged information; and
generating the start signal according to the corresponding at least one complete signal indicating that the firmware of all of the at least one second processor is updated completely.

5. The firmware updating system of claim 8, **characterized in that** the packaged firmware comprises a check code encoded by a cyclic redundancy check, CRC, for checking correctness of the packaged firmware.

6. The firmware updating system of claim 4, **characterized in that** the at least one second processor reads the corresponding at least one second firmware in the packaged firmware according to the corresponding at least one data start position and the corresponding at least one data size of the at least one second firmware.

## Patentansprüche

1. Firmware-Aktualisierungs-Verfahren (20) für mindestens einen Prozessor, **dadurch gekennzeichnet, dass** es umfasst:
Speichern einer gepackten Firmware in einer gepackten Firmware Speichereinheit (202);
Lesen und Analysieren einer gepackten Information in der gepackten Firmware (204);
Lesen einer ersten Firmware in der gepackten Firmware gemäß der gepackten Information,
um eine Firmware eines ersten Prozessors (206) zu aktualisieren;
Erzeugen mindestens einer Aktualisierungs-Information entsprechend mindestens einem zweiten Prozessor gemäß der gepackten Information (208);
Ausgeben der mindestens einen Aktualisierungs-Information zu dem entsprechenden mindestens einen zweiten Prozessor und Benachrichtigen des mindestens einen zweiten Prozessors, um entsprechend mindestens eine zweite Firmware in der gepackten Firmware zu lesen, um eine Firmware des mindestens einen zweiten Prozessors (210) zu aktualisieren; und
Erzeugen eines Start-Signals gemäß entsprechend mindestens einem vollständigen Signal,
das von dem mindestens einen zweiten Prozessor erzeugt wurde, nachdem die Firmware des mindestens einen zweiten Prozessors aktualisiert wurde, um den ersten Prozessor und den mindestens einen zweiten Prozessor von einem erneuten Start (212) zu unterrichten;
worin der mindestens eine zweite Prozessor die entsprechende mindestens eine zweite Firmware in der gepackten Firmware gemäß der entsprechenden mindestens einen Aktualisierungs-Information zur Aktualisierung der Firmware des mindestens einen zweiten Prozessors zu lesen;
worin die gepackte Information eine Daten-Start-Position und ein Datenvolumen der ersten Firmware in der gepackten Firmware umfasst und mindestens eine Daten-Start-Position und
mindestens ein Datenvolumen der mindestens einen zweiten Firmware in der gepackten Firmware, und wobei das Firmware-Aktualisierungs-Verfahren umfasst:
Lesen der ersten Firmware gemäß der Daten-Start-Position und des Datenvolumens der ersten Firmware in der gepackten Information;
Erzeugen der entsprechenden mindestens einen Daten-Start-Position und des entsprechenden mindestens einen Datenvolumens der mindestens einen zweiten Firmware in der gepackten Firmware in der gepackten Information; and
Erzeugen des Startsignals gemäß dem entsprechenden mindestens einen vollständigen Signal, welches anzeigt, dass die Firmware des gesamten mindestens einen zweiten Prozessors vollständig aktualisiert wurde.

2. Firmware-Aktualisierungs-Verfahren nach Anspruch 1, **dadurch gekennzeichnet, dass** die gepackte Firmware einen Prüf-Code umfasst, der durch eine zyklische Redundanzprüfung, CRC, zur Überprüfung der Fehlerfreiheit der gepackten Firmware kodiert wird.

3. Firmware-Aktualisierungs-Verfahren nach Anspruch 1, **dadurch gekennzeichnet, dass** der mindestens eine zweite Prozessor die entsprechende mindestens eine zweite Firmware in der gepackten Firmware gemäß der entsprechenden mindestens einen Daten-Start-Position und dem entsprechenden mindestens einen Datenvolumen der mindestens einen zweiten Firmware liest.

4. Firmware-Aktualisierungs-System (10), für mindestens einen Prozessor (CPU_1-CPU_n), **dadurch gekennzeichnet, dass** es umfasst:
einen ersten Prozessor (CPU_1);
mindestens einen zweiten Prozessor (CPU_2-CPU_n); und
eine Speichereinrichtung (100), in der Programm-Ccode (104) gespeichert ist, worin der Programm-Code (104) dem ersten Prozessor (CPU_1) aufgibt, ein Firmware-Aktualisierungs-Verfahren (20) durchzuführen, und worin das Firmware-Aktualisierungs-Verfahren (20) umfasst:
Speichern einer gepackten Firmware in eine gepackte Firmware-Speichereinheit (202);
Lesen und Analysieren einer gepackten Information in der gepackten Firmware (204);
Lesen einer ersten Firmware in der gepackten Firmware gemäß der gepackten Information,
um eine Firmware eines ersten Prozessors (206) zu aktualisieren;
Erzeugen mindestens einer Aktualisierungs-Information entsprechenden mindestens eines zweiten Prozessors gemäß der gepackten Information (208);
Ausgeben der mindestens einen Aktualisierungs-Information zu dem entsprechenden mindestens einen zweiten Prozessor und Benachrichtigen des mindestens einen zweiten Prozessors, die entsprechende mindestens eine zweiten Firmware in der gepackten Firmware zu lesen, um eine Firmware des mindestens einen zweiten Prozessors (210) zu aktualisieren; und
Erzeugen eines Startsignals gemäß dem entsprechenden mindestens einen vollständigen Signal, das von dem mindestens einen zweiten Prozessor erzeugt wurde, nachdem die Firmware des mindestens einen zweiten Prozessors aktualisiert wurde, um den ersten Prozessor und den mindestens einen zweiten Prozessor zum erneuten Start (212) zu bringen;
worin der mindestens eine zweite Prozessor die entsprechende mindestens eine zweite Firmware in der gepackten Firmware gemäß der entsprechenden mindestens einen Aktualisierungs-Information zum Aktualisieren der Firmware des mindestens einen zweiten Prozessors liest;
worin die gepackte Information eine Daten-Start-Position und ein Datenvolumen der ersten Firmware in der gepackten Firmware umfasst und mindestens eine Daten-Start-Position und mindestens ein Datenvolumen der mindestens einen zweiten Firmware in der gepackten Firmware, und der Firmware-Aktualisierungs-Verfahren:
Lesen der ersten Firmware gemäß der Daten-Start-Position und der Datenvolumen des ersten Firmware in der gepackten Information;
Erzeugen der entsprechenden mindestens einen Daten-Start-Position und der entsprechenden mindestens einen Datenvolumen des mindestens einen zweiten Firmware in der gepackten Firmware in der gepackten Information; und
Erzeugen des Startsignals gemäß dem entsprechenden mindestens einen vollständigen Signal, das anzeigt, dass die Firmware des gesamten des mindestens einen zweiten Prozessor vollständig aktualisiert wurde.

5. Firmware-Aktualisierungs-System nach Anspruch 8, **dadurch gekennzeichnet, dass** die gepackte Firmware einen Prüf-Code umfasst, der durch eine zyklische Redundanzprüfung (CRC) zur Überprüfung der Fehlerfreiheit der gepackten Firmware kodiert wird.

6. Firmware-Aktualisierungs-System nach Anspruch 4, **dadurch gekennzeichnet, dass** der mindestens eine zweite Prozessor die entsprechende mindestens eine zweite Firmware in der gepackten Firmware gemäß der entsprechenden mindestens einen Daten-Start-Position und dem entsprechenden mindestens einen Datenvolumen der mindestens einen zweiten Firmware liest.

## Revendications

1. Procédé de mise à jour de micrologiciel (20), pour au moins un processeur, **caractérisé en ce que** celui-ci comprend :
le stockage d'un micrologiciel conditionné dans une unité de stockage de micrologiciel conditionné (202) ;
la lecture et l'analyse d'une information conditionnée dans le micrologiciel conditionné (204) ;
la lecture d'un premier micrologiciel dans le micrologiciel conditionné en fonction de l'information conditionnée, pour mettre à jour un micrologiciel d'un premier processeur (206) ;
la génération d'au moins une information de mise à jour correspondant à au moins un deuxième processeur en fonction de l'information conditionnée (208) ;
la délivrance de l'au moins une information de mise à jour à l'au moins un deuxième processeur correspondant, et l'invitation de l'au moins un deuxième processeur à lire au moins un deuxième mg correspondant dans le micrologiciel conditionné pour mettre à jour un micrologiciel de l'au moins un deuxième processeur (210) ; et
la génération d'un signal de départ en fonction d'au moins un signal complet correspondant généré par l'au moins un deuxième processeur après la mise à jour du micrologiciel de l'au moins un deuxième processeur, pour inviter le premier processeur et l'au moins un deuxième processeur à redémarrer (212) ;
dans lequel l'au moins un deuxième processeur lit l'au moins un deuxième micrologiciel correspondant dans le micrologiciel conditionné en fonction de l'au moins une information de mise à jour correspondante, pour mettre à jour le micrologiciel de l'au moins un deuxième processeur ;
dans lequel l'information conditionnée comprend une position de démarrage de données et une taille de données du premier micrologiciel dans le micrologiciel conditionné, et au moins une position de démarrage de données et au moins une taille de données de l'au moins un deuxième micrologiciel dans le micrologiciel conditionné, et le procédé de mise à jour de micrologiciel comprend :
la lecture du premier micrologiciel en fonction de la position de démarrage de données et de la taille de données du premier micrologiciel dans l'information conditionnée ;
la génération de l'au moins une position de démarrage de données correspondante et de l'au moins une taille de données correspondante de l'au moins un deuxième micrologiciel dans le micrologiciel conditionné dans l'information conditionnée ; et
la génération du signal de démarrage en fonction de l'au moins un signal complet correspondant indiquant que le micrologiciel de l'ensemble de l'au moins un deuxième processeur est entièrement mis à jour.

2. Procédé de mise à jour de micrologiciel selon la revendication 1, **caractérisé en ce que** le micrologiciel conditionné comprend un code de vérification encodé par un contrôle de redondance cyclique, CRC, pour vérifier l'exactitude du micrologiciel conditionné.

3. Procédé de mise à jour de micrologiciel selon la revendication 1, **caractérisé en ce que** l'au moins un deuxième processeur lit l'au moins un deuxième micrologiciel correspondant dans le micrologiciel conditionné en fonction de l'au moins une position de démarrage de données correspondante et de l'au moins une taille de données correspondante de l'au moins un deuxième micrologiciel.

4. Système de mise à jour de micrologiciel (10) pour au moins un processeur (CPU_1-CPU_n), **caractérisé en ce qu'**il comprend :
un premier processeur (CPU_1) ;
au moins un deuxième processeur (CPU_2-CPU_n) ; et
un dispositif de stockage (100) stockant un code de programme (104), le code de programme (104) indiquant au premier processeur (CPU_1) d'exécuter un procédé de mise à jour de micrologiciel (20), et le procédé de mise à jour de micrologiciel (20) comprenant :
le stockage d'un micrologiciel conditionné dans une unité de stockage de micrologiciel conditionné (202) ;
la lecture et l'analyse d'une information conditionnée dans le micrologiciel conditionné (204) ;
la lecture d'un premier micrologiciel dans le micrologiciel conditionné en fonction de l'information conditionnée, pour mettre à jour un micrologiciel d'un premier processeur (206) ;
la génération d'au moins une information de mise à jour correspondant à au moins un deuxième processeur en fonction de l'information conditionnée (208) ;
la délivrance de l'au moins une information de mise à jour à l'au moins un deuxième processeur correspondant, et l'invitation de l'au moins un deuxième processeur à lire au moins un deuxième mg correspondant dans le micrologiciel conditionné pour mettre à jour un micrologiciel de l'au moins un deuxième processeur (210) ; et
la génération d'un signal de départ en fonction d'au moins un signal complet correspondant généré par l'au moins un deuxième processeur après la mise à jour du micrologiciel de l'au moins un deuxième processeur, pour inviter le premier processeur et l'au moins un deuxième processeur à redémarrer (212) ;
dans lequel l'au moins un deuxième processeur lit l'au moins un deuxième micrologiciel correspondant dans le micrologiciel conditionné en fonction de l'au moins une information de mise à jour correspondante, pour mettre à jour le micrologiciel de l'au moins un deuxième processeur ;
dans lequel l'information conditionnée comprend une position de démarrage de données et une taille de données du premier micrologiciel dans le micrologiciel conditionné, et au moins une position de démarrage de données et au moins une taille de données de l'au moins un deuxième micrologiciel dans le micrologiciel conditionné, et le procédé de mise à jour de micrologiciel comprend :
la lecture du premier micrologiciel en fonction de la position de démarrage de données et de la taille de données du premier micrologiciel dans l'information conditionnée ;
la génération de l'au moins une position de démarrage de données correspondante et de l'au moins une taille de données correspondante de l'au moins un deuxième micrologiciel dans le micrologiciel conditionné dans l'information conditionnée ; et
la génération du signal de démarrage en fonction de l'au moins un signal complet correspondant indiquant que le micrologiciel de l'ensemble de l'au moins un deuxième processeur est entièrement mis à jour.

5. Système de mise à jour de micrologiciel selon la revendication 8, **caractérisé en ce que** le micrologiciel conditionné comprend un code de vérification encodé par un contrôle de redondance cyclique, CRC, pour vérifier l'exactitude du micrologiciel conditionné.

6. Système de mise à jour de micrologiciel selon la revendication 4, **caractérisé en ce que** l'au moins un deuxième processeur lit l'au moins un deuxième micrologiciel correspondant dans le micrologiciel conditionné en fonction de l'au moins une position de démarrage de données correspondante et de l'au moins une taille de données correspondante de l'au moins un deuxième micrologiciel.
